# EUROPÄISCHE PATENTSCHRIFT

(11) **EP 0 647 516 B1**
(45) Veröffentlichungstag und Bekanntmachung des Hinweises auf die Patenterteilung: **23.10.1996**
(21) Anmeldenummer: 94108916.1
(22) Anmeldetag: 09.06.1994
(51) Int. Cl.: B29C 47/92

(54) **Vorrichtung zur Einstellung des Massedruckes in Schneckenextrudern**
Device for adjusting the mass pressure in screw extruders
Dispositif pour ajuster la pression de matière dans les extrudeuses à vis sans fin

(30) Priorität: 11.10.1993 DE 4334564
(43) Veröffentlichungstag der Anmeldung: 12.04.1995
(73) Patentinhaber: Werner & Pfleiderer GmbH, 70469 Stuttgart (DE)
(72) Erfinder: Lauser, Wolfgang, D-71229 Leonberg (DE)

(56) Entgegenhaltungen:
- EP-A- 0 336 702
- US-A- 1 540 209
- US-A- 1 802 897
- US-A- 4 184 772
- PATENT ABSTRACTS OF JAPAN vol. 6, no. 167 (M-153) (1045) 31. August 1982 & JP-A-57 082 032 (TOSHIBA KIKAI K.K.) 22. Mai 1982

## Beschreibung

Die Erfindung betrifft eine Vorrichtung zur Einstellung des Massedrucks bei der Aufbereitung von Kunststoffen in Schneckenextrudern gemäß dem Oberbegriff des Patentanspruchs 1. Eine Vorrichtung dieser Art ist beispielsweise aus der US-A-4 184 772 bekannt.

Es ist allgemein bekannt am Ausgang eines Schneckenextruders im Bereich des Schmelzekanals eine Drossel anzuordnen, mit der der Druckaufbau im Extruder beeinflusst werden kann.
Hierbei sind mehrere Bauarten bekannt um den Schmelzkanalquerschnitt zu verengen bzw. zu erweitern. Die meisten Drosseln sind technisch sehr kompliziert und bestehen aus mehreren Einzelteilen (z.B. DE-AS 12 12 295).

Eine einfache Bauart besteht aus einem quer zum Schmelzefluss verschiebbaren Stempel (z.B. G. Schenkel, Kunststoff-Extrudertechnik, S. 261, Abb. 6/54). Nachteilig hierbei ist, dass der Massefluss geteilt wird und Strömungsschatten unmittelbar hinter dem Stempel entstehen, so dass sich hier Teile des geschmolzenen Kunststoffes absetzen und dann dort verbrennen oder sich zersetzen können.

Der Erfindung liegt die Aufgabe zugrunde, eine einfache, robuste Drossel in Stempelbauweise für Schneckenextruder anzugeben, die die Nachteile der bekannten Stempel-Drosseln vermeidet.

Diese Aufgabe wird erfindungsgemäss durch die Merkmale des Patentanspruches 1 gelöst.
Hierbei ist sichergestellt, dass ein beidseitiger konstanter Materialfluss durch die rechteckige Querschnittsform des Schmelzekanals gegeben ist und Toträume unmittelbar hinter dem zylindrischen Stempel durch die in Fliessrichtung angeordneten Durchgangsbohrungen im Eintauchbereich des Stempel mit Sicherheit vermieden sind.

Die Weiterbildung der Erfindung nach Anspruch 2 gibt eine vorteilhafte stufenlose Verstellung für den Stempel an, wobei gleichzeitig sichergestellt ist, dass mit zunehmender Drosselung der Schmelze eine verbesserte Freispülung der Toträume erfolgt.
Ein bevorzugtes Einsatzgebiet der Erfindung ist durch die Merkmale des Anspruches 3 aufgezeigt.

Die Erfindung wird anhand einer Zeichnung erläutert.

Es zeigt:
- Fig. 1: von Oben im Schnitt das Ende eines Doppelschneckenextruders mit rechteckigem Schmelzekanal 2
- Fig. 2: eine vergrösserte Darstellung des Schmelzekanals 2 mit Stempel 3 entlang der Linien I-I gemäss Fig. 1

Am Ende eines Doppelschneckenextruders 1 ist nach den beiden Schnecken 4 und 5 der Schmelzekanal 2 rechteckig ausgebildet. Im Schmelzekanal 2 ist quer zum Schmelzefluss ein zylinderförmiger Stempel 3 stufenlos verschiebbar angeordnet. Die Antriebselemente, die auf dem Schneckengehäuse angeordnet sind, sind wegen einer besseren Übersichtlichkeit nicht mit dargestellt. Sie können aus einem Stellmotor oder hydraulischen Antrieb bestehen. Im Eintauchbereich X des Stempels 3 sind mehrere Durchgangsbohrungen 31 angeordnet. Die Anzahl und Grösse der Durchgangsbohrungen 31 im Eintauchbereich X können je nach Produkttyp ausgelegt werden. Der Austausch eines Stempels 3 ist unkompliziert und kann problemlos vor genommen werden.

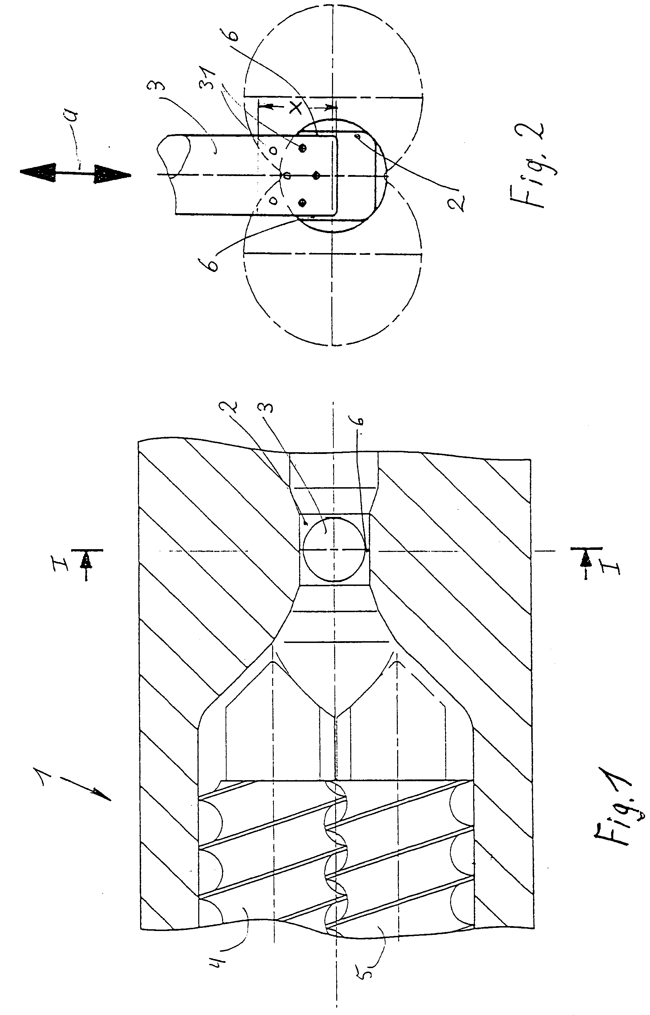

Mit dem zylinderförmigen Stempel 3 ist ein einfaches und robustes Drosselelement zur Regelung des Massedrucks in einem Extruder aufgezeigt, bei dem aufgrund der vorhandenen Durchgangsbohrung 31 keine Toträume hinter der Drosselstelle eintreten können. Vorzugsweise sind mehrere Durchgangsbohrungen 31 im Eintauchbereich x (Fig.2) des Stempels 3 eingebracht. Die Anzahl und der Durchmesser der Durchgangsbohrungen 31 richtet sich nach der Grösse des Stempels 3 und der Beschaffenheit des Kunststoffproduktes. Die Abmessungen des Stempels 3 gegenüber dem rechteckigen Schmelzekanal 2 sind so gewählt, dass rechts und links des Stempels 3 je ein kleiner Spalt 6 vorhanden ist und somit ein ständiger seitlicher Materialfluss gewährleistet ist.

Mit dem Stempel 3 kann jede beliebige Drosselstellung durch eine einfache Verschiebung in Richtung des Doppel-Pfeiles a erreicht werden.

Neben der hier im Ausführungsbeispiel als Anfahrdrossel für einen Doppelschneckenextruder beschriebenen Drossel, kann die erfindungsgemässe Vorrichtung bei allen Ein-oder Mehrwellenschneckenextrudern zur Regelung des Massdruckes eingesetzt werden.

## Patentansprüche

1. Vorrichtung zur Einstellung des Massedrucks bei der Aufbereitung von Kunststoffen in einem Schneckenextruder (1) mittels eines am Ausgang des Schneckenextruders (1) quer zum Schmelzefluss in den Schmelzekanal (2) verschiebbaren zylinderförmigen Stempels (3), der im Schmelzekanal (2) symmetrisch so verschiebbar angeordnet ist, dass ein beidseitiger konstanter Materialfluss gewährleistet ist, dadurch gekennzeichnet, dass der Schmelzekanal (2) rechteckig ist und im Eintauchbereich (x) des Stempels (3) wenigstens eine in Fliessrichtung verlaufende Durchgangsbohrung (31) angeordnet ist.

2. Vorrichtung nach Anspruch 1, dadurch gekennzeichnet, dass der Stempel (3) radial von aussen stufenlos hydraulisch oder über einen Stellmotor verstellbar ausgebildet ist, wobei im Eintauchbereich (x) die Durchgangsbohrungen (31) so verteilt angeordnet sind, dass mit zunehmender Drosselung der freien Querschnittsfläche des Schmelzekanals (2) eine zunehmende Freigabe der Querschnittsfläche der Durchgangsbohrungen (31) für den Schmelzefluss erfolgt.

3. Vorrichtung nach einem der vorhergehenden Ansprüche, dadurch gekennzeichnet, dass der Stempel (3) bei einem Doppelschneckenextruder (1) als Anfahrdrossel eingesetzt ist.

## Claims

1. Device for the setting of the mass pressure for the preparation of synthetic materials in a screw extruder (1) by means of a cylindrical plunger (3), which is displaceable into the melt channel (2) transversely to the melt flow at the exit of the screw extruder (1) and which is arranged to be so displaceable symmetrically in the melt channel (2) that a constant material flow at both sides is assured, characterised thereby, that the melt channel (2) is rectangular and at least one passage bore (31) extending in the direction of flow is arranged in the entering region (X) of the plunger (3).

2. Device according to claim 1, characterised thereby, that the plunger (3) is constructed to be steplessly adjustable radially from outside hydraulically or by way of a setting motor, wherein the passage bores (31) are arranged to be so distributed in the entering region (X) that an increasing freeing of the cross-sectional area of the passage bores (31) for the melt flow takes place with increasing throttling of the free cross-sectional area of the melt channel (2).

3. Device according to one of the preceding claims, characterised thereby, that the plunger (3) is used as running-up throttle in a twin-screw extruder (1).

## Revendications

1. Dispositif pour régler la pression de matière lors de l'élaboration de matières plastiques dans une extrudeuse (1) à vis sans fin, au moyen d'un bloc presseur cylindrique (3) qui peut coulisser dans le canal (2) à matière en fusion, à la sortie de l'extrudeuse (1) à vis sans fin, transversalement par rapport au flux de matière en fusion, et qui peut accomplir des coulissements symétriques, dans le canal (2) à matière en fusion, de manière à garantir un flux de matière constant de part et d'autre, caractérisé par le fait que le canal (2) à matière en fusion est rectangulaire et au moins un trou de passage (31), s'étendant dans la direction de l'écoulement, se trouve dans la zone de plongée (X) du bloc presseur (3).

2. Dispositif selon la revendication 1, caractérisé par le fait que le bloc presseur (3) est de réalisation réglable en continu, radialement de l'extérieur, en mode hydraulique ou par l'intermédiaire d'un servomoteur, les trous de passage (31) étant agencés, dans la zone de plongée (X), avec répartition telle qu'un étranglement croissant de la superficie de la section transversale libre du canal (2) à matière en fusion s'accompagne d'une libération croissante de la superficie de la section transversale des trous de passage (31), affectés au flux de matière en fusion.

3. Dispositif selon l'une des revendications précédentes, caractérisé par le fait que le bloc presseur (3) est utilisé en tant qu'étranglement initial dans une extrudeuse (1) à deux vis sans fin.
